# EUROPÄISCHE PATENTSCHRIFT

(11) **EP 3 193 041 B1**
(45) Veröffentlichungstag und Bekanntmachung des Hinweises auf die Patenterteilung: **28.08.2019**
(21) Anmeldenummer: 16195911.9
(22) Anmeldetag: 27.10.2016
(51) Int. Cl.: F16H 3/00

(54) **STUFENGETRIEBE FÜR EIN KRAFTFAHRZEUG**
MULTI-STAGE GEAR FOR A MOTOR VEHICLE
BOÎTE DE VITESSES DE VÉHICULE AUTOMOBILE

(30) Priorität: 25.11.2015 DE 102015120356
(43) Veröffentlichungstag der Anmeldung: 19.07.2017
(73) Patentinhaber: Magna PT B.V. & Co. KG, 74199 Untergruppenbach (DE)
(72) Erfinder: Rühle, Günter, 74369 Löchgau (DE); Wolf, Dr., Walter, 71672 Marbach a.N. (DE); Flaig, Armin, 74523 Schwäbisch Hall (DE)
(74) Vertreter: Rausch, Gabriele

(56) Entgegenhaltungen:
- DE-A1-102004 020 955
- DE-A1-102005 058 946
- DE-A1-102009 014 938
- FR-A1- 2 897 407
- JP-A- H03 219 159

## Beschreibung

Die vorliegende Erfindung betrifft ein Stufengetriebe für Kraftfahrzeuge, insbesondere in Form eines Doppelkupplungsgetriebes, mit einer Eingangswellenanordnung, die entlang einer Eingangsachse ausgerichtet ist, mit einer Vorgelegewelle die entlang einer Vorgelegeachse ausgerichtet ist, mit einer Mehrzahl von wenigstens sechs Vorwärtsgangstufen, die durch jeweilige gangstufen-spezifische Vorwärtsgang-Radsätze einrichtbar sind, die jeweils ein Vorwärtsgang-Losrad und ein Vorwärtsgang-Festrad aufweisen, und die mittels einer jeweiligen Vorwärtsgang-Schaltkupplung einlegbar bzw. auslegbar sind; und mit einem Ausgangs-Radsatz, der ein an der Vorgelegewelle gelagertes erstes Ausgangsrad und ein zweites Ausgangsrad aufweist, das an einer Ausgangswelle gelagert ist, die entlang einer Ausgangsachse ausgerichtet ist.

Ein derartiges Stufengetriebe in Form eines Vorgelege-Stufengetriebes für Kraftfahrzeuge ist allgemein bekannt.

Auf dem Gebiet dieser Stufengetriebe besteht generell ein Wunsch nach einer möglichst hohen Anzahl von Vorwärtsgangstufen, um hierdurch eine hohe Spreizung des Stufengetriebes und/oder kleine Gangsprünge zu erzielen. Ferner besteht generell ein Bedarf, derartige Stufengetriebe radial und/oder axial kompakt auszubilden. Ein weiteres Ziel bei der Entwicklung derartiger Stufengetriebe besteht darin, eine möglichst hohe Flexibilität in der Wahl der einzelnen Gangübersetzungen zu realisieren.

Für Anwendungen im Sportwagenbereich ist häufig auch die Frage des Schwerpunkts von Bedeutung, wie auch eine möglichst optimale Gewichtsverteilung zwischen Vorderachse und Hinterachse, je nach Einbaulage des Getriebes.

Es ist jedoch schwierig, all diese Zielparameter gleichermaßen gut zu erfüllen.

Aus den Dokumenten DE 10 2012 206 631 A1, DE 10 2012 000 090 A1 sowie DE 10 2012 000 093 A1 sind jeweils Doppelkupplungs-Mehrganggetriebe bekannt, die wenigstens acht Vorwärtsgangstufen realisieren können. Einer Eingangswellenanordnung sind dabei zwei Vorgelegewellen zugeordnet, die über einen gemeinsamen Abtriebsradsatz mit einem Differential verbindbar sind. Derartige Getriebe können zwar axial kompakt bauen, insbesondere, wenn sogenannte Doppelnutzungen realisiert sind, bei denen ein Festrad mit zwei Losrädern unterschiedlicher Gangstufen in Eingriff steht. Hierdurch kann jedoch die Übersetzung der einzelnen Gangstufen möglicherweise nicht frei gewählt werden.

Ferner ist es bekannt, eine hohe Anzahl an Gangstufen dadurch zu realisieren, dass man Stirnradstufen und Planetenradstufen miteinander kombiniert (siehe beispielsweise DE 20 208 017 570 U1). Die Komplexität des Getriebes steigt hierdurch jedoch. Ferner werden die Lagerung und die Aktuierung aufwendig.

Ein weiteres Konzept zur Realisierung einer hohen Anzahl von Vorwärtsgangstufen besteht darin, sogenannte Windungsgangstufen bzw. Windungsgetriebe zu realisieren. Typischerweise werden wenigstens einige Vorwärts-Gangstufen in derartigen Getrieben dadurch eingerichtet, dass wenigstens zwei Schaltkupplungen gleichzeitig geschlossen werden (siehe beispielsweise DE 10 2006 054 281 A1).

DE 10 2005 058 946 A1 offenbart ein Lagerkonzept für ein Doppelkupplungsgetriebe, wobei die Eingangswelle nicht tiefer als die Vorgelegewelle angeordnet ist.

FR 2 897 407 A offenbart keine Eingangswelle, die tiefer angeordnet ist, als die Vorgelegewelle.

DE 10 2009 014 938 A1 zeigt ein Doppelkupplungsgetriebe, in dem eine der beiden Vorgelegewellen höher als die Eingangswelle angeordnet. Jedoch ist diese Vorgelegewelle höher als die Ausgangswelle angeordnet.

JP 03 219159 zeigt eine gegenüber der Eingangswelle höher angeordnete Vorgelegewelle.

DE 10 2004 020 955 A zeigt ein Doppelkupplungsgetriebe, wobei keine Ausgangswelle und die in Relation zum Getriebe stehende Einbaulage des Differentials bzw. die Differentialachse vorhanden ist.

Bei manchen derartigen Stufengetrieben ist eine Antriebsachse im Bereich einer getriebeeingangsseitigen Kupplungsanordnung vorgesehen. Insbesondere beim Einbau in Längsbauweise ist bei manchen Getrieben daher vorgesehen, diese Antriebsachse über eine schräge Welle anzutreiben. Hierdurch erhöht sich jedoch der Verzahnungsaufwand. In manchen Fällen wird eine derartige schräge Welle auch außerhalb des Getriebegehäuses geführt.

Bei anderen Ausführungsformen ist eine Vorgelege- bzw. Zwischenwelle über einen Konstanten-Radsatz mit einer Ausgangswelle verbunden, mittels der ein Differential der Antriebsachse angetrieben wird.

Vor dem obigen Hintergrund ist es eine Aufgabe der Erfindung, ein verbessertes Stufengetriebe für Kraftfahrzeuge anzugeben, das vorzugsweise wenigstens einen der obigen Nachteile vermeidet.

Diese Aufgabe wird bei dem eingangs genannten Stufengetriebe in einem Aspekt der Erfindung dadurch gelöst, dass die Eingangswellenanordnung und/oder die Vorgelegewelle in einem axial zwischen zwei Vorwärtsgang-Radsätzen liegenden Bereich mittels einer Lagerwand gelagert ist. Die Lagerung von einer oder der beiden Wellen an einer solchen Lagerwand bzw. Lagerebene ermöglicht eine Abstützung in einem mittleren Bereich, so dass eine Wellendurchbiegung verringert werden kann.

Das Stufengetriebe weist vorzugsweise ein Gehäuse auf, das eines oder mehrere Gehäuseteile beinhaltet, die im Wesentlichen topf- oder zylinderförmig ausgestaltet sind und die Wellen und Radsätze im Wesentlichen vollumfänglich umgeben. Die Lagerwand kann dabei insbesondere ein Bestandteil eines derartigen Gehäuseteils sein. Insbesondere kann die Lagerwand in einem axial mittleren Berich eines Zwischengehäuses ausgebildet sein. Die Lagerwand ist in diesem Fall vorzugsweise einstückig mit einem solchen zylinderförmigen Zwischengehäuse ausgebildet. Die Lagerwand kann jedoch auch durch eine sogenannte Lagerplatte gebildet sein, die als separate Wand ausgebildet und in der Regel zwischen zwei Gehäuseteile eingelegt ist, oder aber mit einem der Gehäuseteile an einem axialen Ende hiervon starr verbunden ist.

Bei der Lagerung der Eingangswellenanordnung und/oder der Vorgelegewelle handelt es sich vorzugsweise um eine radiale Drehlagerung.

Die Eingangswellenanordnung kann eine einzelne Welle sein oder kann durch zwei Wellen gebildet sein, die insbesondere eine innere Welle und eine Hohlwelle aufweisen. Die Ausgestaltung mit zwei Wellen ist insbesondere bei einem Doppelkupplungsgetriebe vorteilhaft. Die zwei Wellen sind in diesem Fall vorzugsweise koaxial zueinander angeordnet.

Die Vorgelegeachse ist vorzugsweise parallel versetzt zu der Eingangsachse. Die Vorgelegewelle erstreckt sich vorzugsweise über etwa die gleiche Länge wie die Eingangswellenanordnung. Bei einem Doppelkupplungsgetriebe erstreckt sich die Vorgelegewelle insbesondere über wenigstens einen Abschnitt der Innenwelle und über einen axialen Abschnitt der Hohlwelle.

Die Zahnräder der Radsätze sind vorzugsweise als Stirnräder ausgebildet, insbesondere mit einer Schrägverzahnung. Die Vorwärtsgang-Radsätze sind vorzugsweise axial hintereinander angeordnet, so dass jeder Vorwärtsgangstufe eine eigene Radsatzebene zugeordnet ist. Hierdurch können Doppelnutzungen vermieden werden, so dass für jeden Gang eine freie Übersetzungswahl ermöglicht ist. Die Vorwärtsgang-Schaltkupplungen sind vorzugsweise in Schaltkupplungspakete integriert, bei denen eine Schaltmuffe zwei Schaltkupplungen betätigt. Die Anzahl der Vorwärtsgangstufen des Stufengetriebes beträgt vorzugsweise sechs oder mehr, insbesondere zwischen sechs und zehn Vorwärtsgangstufen, insbesondere sieben bis neun Vorwärtsgangstufen, und vorzugsweise genau acht Vorwärtsgangstufen.

Das erste Ausgangsrad ist vorzugsweise fest mit der Vorgelegewelle verbunden. Das zweite Ausgangsrad ist vorzugsweise fest mit der Ausgangswelle verbunden. Die Ausgangswelle ist vorzugsweise parallel versetzt sowohl zu der Eingangswellenanordnung als auch zu der Vorgelegewelle.

Der Ausgangs-Radsatz weist vorzugsweise eine eigene Ebene auf, die sich von den Radsatzebenen der Vorwärtsgangstufen unterscheidet.

Die Aufgabe wird somit vollkommen gelöst.

Hierbei ist es von besonderem Vorteil, wenn der Ausgangs-Radsatz axial benachbart zu der Lagerplatte angeordnet ist. Hierdurch ist es möglich, den Ausgangs-Radsatz, über den ggf. hohe Momente zu übertragen sind, über die Lagerung an der Lagerwand abzustützen.

Gemäß einer weiteren bevorzugten Ausführungsform sind die Ausgangswelle und/oder die Rückwärtsgangwelle an der Lagerwand drehbar gelagert.

Hierdurch kann die Lagerwand mehrere Lagerfunktionen übernehmen. Von besonderem Vorzug ist es, wenn sämtliche Wellen des Stufengetriebes drehbar an der Lagerwand gelagert sind, also insbesondere die Eingangswellenanordnung, die Vorgelegewelle, die Ausgangswelle und die Rückwärtsgangwelle. Die Lagerwand kann generell auch als Lagerebene bezeichnet werden. Sofern nachstehend auf eine Lagerplatte Bezug genommen wird, so soll sich diese Bezugnahme in gleicher Weise auf eine Lagerwand bzw. Lagerebene beziehen.

Gemäß einer weiteren bevorzugten Ausführungsform erstrecken sich die Ausgangswelle und/oder die Rückwärtsgangwelle von der Lagerwand aus in axialer Richtung hin zu einem Eingang des Stufengetriebes, über den die Eingangswellenanordnung mit einer Kupplungsanordnung verbindbar ist.

Hierbei ist es von besonderem Vorzug, wenn der Konstanten-Radsatz zur Verbindung der Vorgelegewelle mit der Ausgangswelle sowie das Rückwärtsgang-Losrad und dessen zugeordnete Rückwärtsgang-Schaltkupplung auf der gleichen axialen Seite der Lagerwand angeordnet sind. Die Ausgangswelle und/oder die Rückwärtsgangwelle werden vorzugsweise jeweils mittels eines weiteren Lagers bzw. mittels einer weiteren Lageranordnung drehbar gelagert, die axial versetzt gegenüber der Lagerwand angeordnet ist, und zwar vorzugsweise auf der gleichen axialen Seite der Lagerwand.

Ferner ist es hierbei von besonderem Vorteil, wenn das zweite Ausgangsrad, in axialer Richtung gesehen, zwischen der Lagerplatte und einer Differentialtriebanordnung angeordnet ist, mittels der ein Differential zum Verteilen von Antriebsleistung auf angetriebene Räder antreibbar ist.

Die Differentialtriebanordnung liegt in axialer Richtung und in Fahrtrichtung eines Kraftfahrzeuges gesehen, in das das Stufengetriebe eingebaut ist, vorzugsweise vor der Lagerwand, und vorzugsweise hinter einer Kupplungsanordnung, die mit der Eingangswellenanordnung verbunden ist.

Ferner ist es vorteilhaft, wenn ein Vorwärtsgang-Radsatz für die Vorwärtsgangstufe 1 und ein Vorwärtsgangstufen-Radsatz für die Vorwärtsgangstufe 2 auf gegenüberliegenden Seiten der Lagerwand angeordnet sind und wenn diese Radsätze von allen Vorwärtsgang-Radsätzen der Lagerwand am nächsten sind.

Bei dieser Ausführungsform ist es von besonderem Vorzug, wenn das Rückwärtsgang-Losrad mit dem Vorwärtsgang-Radsatz für die Vorwärtsgangstufe 2 in Eingriff steht, und wenn das Rückwärtsgang-Festrad mit dem Vorwärtsgangs-Radsatz für die Vorwärtsgangstufe 1 in Eingriff steht, oder umgekehrt. Die Lagerwand trennt vorzugsweise zwei Teilgetriebe eines Doppelkupplungsgetriebes. Die Rückwärtsgangwelle erstreckt sich vorzugsweise durch die Lagerwand in axialer Richtung hindurch, derart, dass die Rückwärtsgangwelle eine Brücke zwischen Teilgetrieben des Doppelkupplungsgetriebes bildet.

Vorzugsweise ist eine Rückwärtsgangstufe über eine Rückwärtsgangwelle einrichtbar, die entlang einer Rückwärtsgangachse ausgerichtet ist, an der ein mittels einer zugeordneten Rückwärtsgangs-Schaltkupplung schaltbares Rückwärtsgang-Losrad gelagert ist, das mit einem der Vorwärtsgangs-Radsätze in Eingriff steht, und an der ein Rückwärtsgang-Festrad festgelegt ist, das mit einem anderen der Vorwärtsgang-Radsätze in Eingriff steht.

Bei dieser Art von Stufengetriebe kann folglich eine axial kompakte Bauweise realisiert werden, da keine separate Radsatzebene für eine Rückwärtsgangstufe vorzusehen ist. Die Rückwärtsgangstufe kann vielmehr über zwei Zahnräder realisiert werden, die an einer Rückwärtsgangwelle gelagert sind und jeweils mit einem der Vorwärtsgang-Radsätze in Eingriff stehen.

Die Rückwärtsgangwelle und die Ausgangswelle überschneiden sich vorzugsweise in axialer Richtung zumindest abschnittsweise. Vorzugsweise überbrückt die Rückwärtsgangwelle einen Übergang zwischen einem ersten und einem zweiten Teilgetriebe eines Doppelkupplungsgetriebes. Mit anderen Worten steht das Rückwärtsgang-Losrad vorzugsweise mit einem Vorwärtsgang-Radsatz von einem Teilgetriebe in Eingriff, wohingegen das Rückwärtsgang-Festrad mit einem Vorwärtsgang-Radsatz des anderen Teilgetriebes in Eingriff steht.

Die Rückwärtsgangwelle erstreckt sich vorzugsweise über drei Radsatzebenen.

Gemäß der erfindungsgemäßen Ausführungsform weist das Stufengetriebe ein Gehäuse auf, wobei das Gehäuse eine betriebliche Normallage hat, wobei die Eingangswellenanordnung in der betrieblichen Normallage tiefer angeordnet ist als die Vorgelegewelle und/oder tiefer angeordnet ist als die Ausgangswelle.

Die betriebliche Normallage liegt dann vor, wenn das Stufengetriebe in dem Fahrzeug eingebaut ist und wenn das Fahrzeug auf einer Ebene horizontal steht. Die Eingangswellenanordnung ist bei dieser Ausführungsform vorzugsweise die tiefste Welle von Eingangswellenanordnung, Vorgelegewelle, Ausgangswelle und Rückwärtsgangwelle. Ein Abstand zwischen der Eingangsachse und einer Unterseite des Gehäuses des Stufengetriebes ist vorzugsweise kleiner als 130 mm, insbesondere kleiner als 115 mm.

Diese Maßnahmen tragen einzeln und gemeinsam dazu bei, dass das Fahrzeug mit einem niedrigen Schwerpunkt realisiert werden kann, da ein mit dem Stufengetriebe realisierter Antriebsstrang vorzugsweise einen Verbrennungsmotor aufweist, dessen Kurbelwelle koaxial zu der Eingangswellenanordnung angeordnet ist.

Der Antriebsstrang kann beispielsweise als Mittelmotor-Antriebsstrang realisiert sein, bei dem der Verbrennungsmotor vor der Hinterachse des Fahrzeugs angeordnet ist und bei dem zumindest ein Teil des Stufengetriebes hinter der angetriebenen Hinterachse angeordnet ist.

Von besonderem Vorzug ist es hierbei, dass die Ausgangswelle in der betrieblichen Normallage oberhalb der Vorgelegewelle angeordnet ist und/oder in der betrieblichen Normallage unterhalb oder auf der gleichen Höhe wie eine Differentialachse eines Differentials zum Verteilen von Antriebsleistung auf angetriebene Räder angeordnet ist.

Hierdurch lässt sich das Getriebe so in das Fahrzeug einbauen, dass ein niedriger Schwerpunkt realisiert werden kann.

Ferner ist es vorteilhaft, wenn die Eingangswellenanordnung an einem Eingang des Gehäuses mit einer Kupplungsanordnung verbunden ist, wobei die Ausgangswelle mit einem Differential zum Verteilen von Antriebsleistung auf angetriebene Räder gekoppelt ist, wobei eine Differentialachse des Differentials oberhalb der Kupplungsanordnung und/oder in axialer Richtung hinter der Kupplungsanordnung angeordnet ist, in Fahrtrichtung des Fahrzeugs gesehen.

Sofern vorliegend von "vorne" bzw. "hinten" gesprochen wird, so bezieht sich dies immer auf eine Vorwärtsfahrtrichtung eines Kraftfahrzeuges, in das das Getriebe eingebaut ist. Vorzugsweise ist dabei vorne dort, wo die Eingangswellenanordnung mit einer Kupplungsanordnung verbunden ist, und hinten ist der axial gegenüberliegende Bereich des Stufengetriebes.

Gemäß einer weiteren insgesamt bevorzugten Ausführungsform ist die Ausgangswelle mit einer Differentialtriebanordnung verbunden, die als Kegeltriebanordnung ausgebildet ist, wobei ein mit der Ausgangswelle verbundenes Kegelrad ohne Achsversatz mit einem Tellerrad in Eingriff steht, dass ein Antriebsglied eines Differentials antreibt.

Diese Ausgestaltung hat den Vorteil, dass die Kegeltriebanordnung in ein Gehäuse des Stufengetriebes integriert werden kann, das Getriebe also mit dem gleichen Öl für die Radsätze und die Kegeltriebanordnung betrieben werden kann. Denn bei einer Realisierung der Kegeltriebanordnung ohne Achsversatz kann das gleiche Öl verwendet werden wie für die Gangstufen-Radsätze und für die Lager des Stufengetriebes, sowie für die Kupplungsanordnung und/oder eine Hydraulikanordnung.

Ferner ist es bevorzugt, wenn das gleiche Öl auch für eine Kupplungsanordnung verwendet wird, die beispielsweise als nasslaufende Doppelkupplungsanordnung ausgebildet sein kann. Insgesamt kann der Antriebsstrang mit dem Stufengetriebe und der Kupplungsanordnung sowie dem Achsantrieb dann mit einer Art von Öl bzw. einer Ölfüllung bzw. einem Ölhaushalt betrieben werden.

Die Formulierung "ohne Achsversatz" soll vorliegend bedeuten, dass die Kegeltriebanordnung keinen oder so wenig Achsversatz hat, dass das gleiche Öl verwendbar ist wie für die Tribologie der Kupplungsanordnung und/oder einer Hydraulikanordnung.

Gemäß einer weiteren bevorzugten Ausführungsform ist das Stufengetriebe in unterschiedlichen Varianten herstellbar, bei denen die Übersetzung der Vorwärtsgangstufen-Radsätze und/oder die Übersetzung des Ausgangs-Radsatzes unterschiedlich sein kann, wobei bei allen Varianten eine mit der Ausgangswelle verbundene Differentialtriebanordnung identisch ist.

Hierdurch kann die Differentialtriebanordnung in einer hohen Produktionsqualität hergestellt werden, da insbesondere die Übersetzung der Differentialtriebanordnung gleich bleiben kann. Etwaige Variationen der Gesamtübersetzung können durch Variation einer Übersetzung des Ausgangs-Radsatzes implementiert werden.

Insgesamt kann mit der vorliegenden Erfindung ein Stufengetriebe bzw. ein damit hergestellter Antriebsstrang bereitgestellt werden, wobei wenigstens einer der folgenden Vorteile realisierbar ist. Das Stufengetriebe ermöglicht für jede Vorwärtsgangstufe eine freie Übersetzungswahl. Das Stufengetriebe kann 8 Vorwärtsgänge und einen Rückwärtsgang beinhalten. Das Getriebe kann mit einem Ölhaushalt für die Radsätze, für den Differentialtrieb, für die Kupplungsanordnung und für die Aktuierung von Kupplungsanordnung und/oder Schaltkupplungen ausgelegt sein. Das Stufengetriebe kann in Zweiwellenbauweise realisiert sein, wobei Vorwärtsgangstufen direkt zwischen der Eingangswellenanordnung und der Vorgelegewelle (Zwischenwelle) dargestellt sind. Eine Rückwärtsgangstufe lässt sich vorzugsweise ohne zusätzlichen axialen Bauraum durch eine separate Rückwärtsgangwelle realisieren, die parallel zur Vorgelegewelle und zur Eingangswellenanordnung angeordnet ist. Der Endtrieb kann mit seiner Übersetzung so ausgelegt sein, dass für alle Übersetzungsvarianten des Endtriebes die Übersetzung einer Differentialtriebanordnung (z.B. Kegeltriebsatz) immer gleich bleibt, um eine hohe Produktionsqualität gewährleisten zu können. Die Variation der Übersetzung des Endtriebes kann dabei in dem Ausgangsradsatz erfolgen. Die Anordnung der Radsätze ist wirkungsgradoptimiert, um ein geringes Schleppmoment zu realisieren. Durch eine flexible Aufteilung der einzelnen Gangübersetzungen in Gangübersetzung und Übersetzung der Stirnradstufe (Ausgangs-Radsatz) des Endtriebes kann eine Auslegung auf unterschiedliche Lastkollektive erfolgen. Die Eingangswellenanordnung ist an der tiefsten Stelle des Getriebes angeordnet. Das Maß von der Eingangsachse bis zur Unterkante des Getriebes ist vorzugsweise kleiner als 130 mm. Die Abtriebswellen zu Antriebsrädern sind vorzugsweise oberhalb der Eingangswellenanordnung und vorzugsweise über und/oder hinter der Kupplungsanordnung angeordnet. Die Realisierung der Differentialtriebanordnung ohne Achsversatz ermöglicht es, Gleitgeschwindigkeiten im Zahnkontakt zu reduzieren, wodurch die Voraussetzung geschaffen ist, das Getriebe mit nur einem Ölhaushalt betreiben zu können.

Der Wälzlagerungsaufwand ist minimiert. Die verlustoptimierte Anordnung der Losräder ermöglicht eine Minimierung der Radsatz-Schleppmomente. Durch den Entfall einer Öltrennung ergibt sich ein Minimum an Radialwellendichtringen und korrespondierenden Schleppmomenten.

In einer bevorzugten Variante ist die Reihenfolge der Radsätze, gesehen vom Eingang des Stufengetriebes aus, folgende: 8, 6, 4, 2, 1, 3, 7, 5. Die axiale Anordnung der Radsätze 8 und 6 kann vertauscht werden. Ferner kann die axiale Anordnung der Radsätze 5 und 7 vertauscht werden.

Losräder der Gangstufen 8 und 6 sind an der Hohlwelle einer Eingangswellenanordnung drehbar gelagert, wobei ein Schaltkupplungspaket dazwischen angeordnet ist. Losräder der Vorwärtsgangstufen 2 und 4 sind an der Vorgelegewelle drehbar gelagert, wobei eine Schaltkupplungsanordnung dazwischen angeordnet ist. Losräder für die Vorwärtsgangstufen 1 und 3 sind an der Vorgelegewelle drehbar gelagert, wobei eine Schaltkupplungsanordnung dazwischen angeordnet ist. Losräder für die Vorwärtsgangstufen 7 und 5 sind an der Eingangswelle der Eingangswellenanordnung drehbar gelagert, wobei eine Schaltkupplungsanordnung dazwischen angeordnet ist.

Ein Parksperrenrad einer Parksperrenanordnung zum Immobilisieren des Kraftfahrzeuges ist vorzugsweise an der Vorgelegewelle festgelegt, und zwar vorzugsweise hinter dem hintersten Vorwärtsgang-Radsatz.

Ausführungsbeispiele der Erfindung sind in der Zeichnung dargestellt und werden in der nachfolgenden Beschreibung näher erläutert. Es zeigen:
Fig. 1 : eine schematische Darstellung eines Antriebsstranges für ein Kraftfahrzeug mit einer Ausführungsform eines erfindungsgemäßen Stufengetriebes in einer schematischen Abwicklung;
Fig. 2 : eine schematische axiale Draufsicht auf eine Ausführungsform eines erfindungsgemäßen Stufengetriebes;
Fig. 3 : eine schematische Längsschnittansicht durch das Stufengetriebe der Fig. 2 entlang einer Linie III-III;
Fig. 4 : eine schematische Längsschnittansicht entlang einer Linie IV-IV der Fig. 2 ; und
Fig. 5 : eine schematische Längsschnittansicht entlang einer Linie V-V der Fig. 2 .

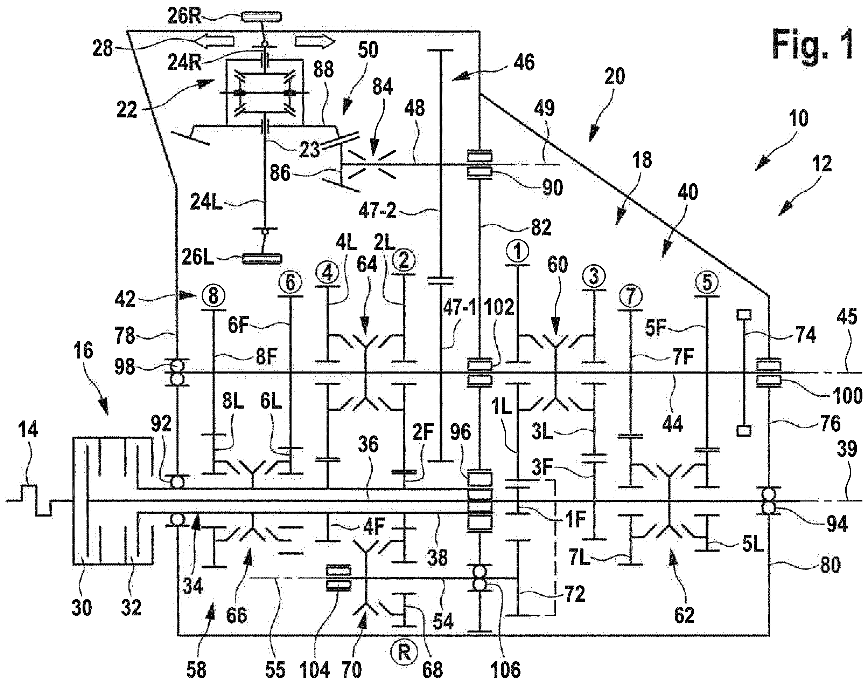

In Fig. 1 ist in schematischer Form ein Kraftfahrzeug 10 mit einem Antriebsstrang 12 dargestellt. Das Kraftfahrzeug 10 kann insbesondere ein Personenkraftwagen sein, vorzugsweise ein Sportwagen.

Der Antriebsstrang 12 weist einen Antriebsmotor 14 auf, der als Verbrennungsmotor ausgebildet sein kann, jedoch auch als Hybrid-Antriebseinheit ausgebildet sein kann. Ein Ausgang des Antriebsmotors 14 ist mit einem Eingang einer Kupplungsanordnung 16 verbunden, die vorliegend als Doppelkupplungsanordnung ausgebildet ist. Die Kupplungsanordnung 16 ist ausgangsseitig mit einem Stufengetriebe 18 verbunden. Das Stufengetriebe 18 weist zwei Teilgetriebe auf und bildet zusammen mit der Kupplungsanordnung 16 ein Doppelkupplungsgetriebe 20.

Ein Ausgang des Doppelkupplungsgetriebes 20 ist mit einem Differential 22 verbunden, das eine Differentialachse 23 aufweist, entlang der zwei Abtriebswellen 24L, 24R angeordnet sind, die mit angetriebenen Rädern 26L, 26R des Kraftfahrzeuges 10 verbunden sind. In Fig. 1 ist bei 28 schematisch eine Richtung einer Vorwärtsfahrt des Kraftfahrzeuges 10 gezeigt. Es ist zu erkennen, dass die Kupplungsanordnung 16 in axialer Richtung vor dem Stufengetriebe 18 angeordnet ist, wobei der Antriebsmotor 14 in axialer Richtung vor der Kupplungsanordnung 16 angeordnet ist. Der Antriebsmotor 14 ist vorzugsweise koaxial zu der Kupplungsanordnung 16 angeordnet.

Die Kupplungsanordnung 16 weist eine erste Reibkupplung 30 sowie eine zweite Reibkupplung 32 auf. Das Stufengetriebe 18 beinhaltet eine Eingangswellenanordnung 34 mit einer Innenwelle 36, die mit einem Ausgangsglied der ersten Reibkupplung 30 verbunden ist, und mit einer Hohlwelle 38, die mit einem Ausgangsglied der zweiten Reibkupplung 32 verbunden ist. Eingangsglieder der Reibkupplungen 30, 32 sind mit einem Ausgang des Antriebsmotors 14 verbunden. Die Eingangswellenanordnung 34 ist entlang einer Eingangsachse 39 angeordnet, die vorzugsweise koaxial zu einer Kurbelwelle des Antriebsmotors 14 ausgerichtet ist.

Wie oben erwähnt, weist das Stufengetriebe 18 ein erstes Teilgetriebe für die ungeraden Gangstufen auf, vorzugsweise vorliegend für die Vorwärtsgangstufen 1, 3, 5 und 7. Ferner beinhaltet das Stufengetriebe 18 ein zweites Teilgetriebe 42, das den geraden Gangstufen zugeordnet ist und vorliegend Vorwärtsgangstufen 2, 4, 6 und 8 beinhaltet. Ferner ist dem zweiten Teilgetriebe 42 eine Rückwärtsgangstufe R zugeordnet.

Das Stufengetriebe 18 weist eine zu der Eingangswellenanordnung 34 parallel angeordnete Vorgelegewelle 44 auf, die entlang einer Vorgelegeachse 45 ausgerichtet ist. Die Vorgelegewelle 44, die auch Zwischenwelle bezeichnet werden kann, ist über einen Ausgangs-Radsatz 46 mit einer Ausgangswelle 48 verbunden. Der Ausgangs-Radsatz 46 weist ein drehfest mit der Vorgelegewelle 44 verbundenes erstes Festrad 47-1 auf, sowie ein zweites Festrad 47-2, das fest mit der Ausgangswelle 48 verbunden ist. Die Ausgangswelle 48 ist entlang einer Ausgangsachse 49 ausgerichtet, die parallel versetzt zu der Vorgelegeachse 45 und parallel versetzt zu der Eingangsachse 39 ausgerichtet ist.

Die Ausgangswelle 48 ist mit einer Differentialtriebanordnung 50 verbunden, mittels der ein Eingangsglied des Differentials 22 angetrieben wird. Die Differentialtriebanordnung 50 kann, wie dargestellt, durch eine Kegeltriebanordnung gebildet sein.

Das Stufengetriebe 18 weist ferner eine Rückwärtsgangwelle 54 auf, die entlang einer Rückwärtsgangachse 55 ausgerichtet ist, wobei die Rückwärtsgangachse 55 parallel versetzt zu der Eingangsachse 39, zu der Vorgelegeachse 45 und parallel versetzt zu der Ausgangsachse 49 angeordnet ist.

Das Stufengetriebe 18 weist eine Mehrzahl von Vorwärtsgang-Radsätzen 58 auf, die jeweils durch ein Losrad und ein Festrad gebildet sind. Jeder der genannten Vorwärtsgänge 1 bis 8 ist ein Vorwärtsgang-Radsatz 58 zugeordnet, wobei die Festräder dieser Radsätze jeweils durch die Gangstufe mit dem Suffix F bezeichnet sind, und wobei deren Losräder jeweils durch die Vorwärtsgangstufe mit dem Suffix L bezeichnet sind. Der Vorwärtsgang-Radsatz 58 für die Vorwärtsgangstufe 8 weist folglich beispielsweise ein Festrad 8F auf, das mit der Vorgelegewelle 44 fest verbunden ist, sowie ein Losrad 8L, das drehbar an der Hohlwelle 38 gelagert ist. Das Stufengetriebe 18 weist einen Eingang auf, an dem die Eingangswellenanordnung 34 mit der Kupplungsanordnung 16 verbunden ist. Ausgehend von dem Eingang weist das Stufengetriebe 18 in dieser Reihenfolge Radsätze für die Vorwärtsgangstufen 8, 6, 4 und 2 auf, die jeweils die Hohlwelle 38 mit der Vorgelegewelle 44 verbinden. Die Losräder 8L, 6L sind drehbar an der Hohlwelle 38 gelagert. Die Losräder 4L, 2L sind drehbar an der Vorgelegewelle 44 gelagert.

Die axiale Reihenfolge der Gangstufen 8, 6 kann auch vertauscht sein.

Ferner beinhaltet das Stufengetriebe 18 in axialer Richtung hinter dem Radsatz für die Gangstufe 2 Radsätze für die Vorwärtsgangstufen 1, 3, 7, 5, und zwar in dieser Reihenfolge. Losräder 1 L, 3L für die Vorwärtsgangstufen 1, 3 sind an der Vorgelegewelle 44 drehbar gelagert. Losräder 7L, 5L für die Vorwärtsgangstufen 5, 7 sind an der Innenwelle 36 drehbar gelagert. Die oben genannten Losräder kämmen mit jeweiligen Festrädern, die jeweils an der anderen Welle festgelegt sind.

Zwischen den Losrädern 1 L, 3L ist eine Schaltkupplungsanordnung 60 angeordnet, die als Schaltkupplungspaket ausgebildet ist, und zwar koaxial zu der Vorgelegewelle 44. Zwischen den Losrädern 7L, 5L ist eine entsprechende Schaltkupplungsanordnung 62 angeordnet. Zwischen den Losrädern 4L, 2L ist eine Schaltkupplungsanordnung 64 angeordnet. Zwischen den Losrädern 6L, 8L ist eine Schaltkupplungsanordnung 66 angeordnet.

In dem oben genannten Layout kann die axiale Reihenfolge der Vorwärtsgangstufen 5 und 7 auch vertauscht sein.

An der Rückwärtsgangwelle 54 ist ein Rückwärtsgang-Losrad 68 drehbar gelagert, das mit dem Festrad 2F der Vorwärtsgangstufe 2 in Eingriff steht. Ferner ist an der Rückwärtsgangwelle 54 eine Schaltkupplung 70 angeordnet, die dem Rückwärtsgang-Losrad 68 zugeordnet ist. An der Rückwärtsgangwelle 54 ist ferner ein Rückwärtsgang-Festrad 72 festgelegt, das mit dem Losrad 1 L der Vorwärtsgangstufe 1 in Eingriff steht, wie es in Fig. 1 durch eine gestrichelte Linie dargestellt ist. Hierdurch wird eine Drehrichtungsumkehr realisiert.

Auf der dem Eingang des Stufengetriebes 18 am entferntest liegenden Ende der Vorgelegewelle 44 ist ein Parksperrenrad 74 festgelegt.

Das Parksperrenrad 74 ist Teil einer nicht näher dargestellten Parksperrenanordnung, die zum Immobilisieren des Fahrzeugs 10 in an sich bekannter Weise dient.

Das Stufengetriebe 18 weist ferner ein Gehäuse 76 auf. Das Gehäuse 76 dient zur Aufnahme der Radsätze 58 und dient ferner zur Aufnahme der Differentialtriebanordnung 50 und vorzugsweise ferner auch zur Aufnahme des Differentials 22. Auch die Kupplungsanordnung 16 kann ggf. in das Gehäuse 76 integriert sein. Bevorzugt ist es, wenn die Radsätze, die Differentialtriebanordnung 50 und optional die Kupplungsanordnung 16 mit dem gleichen Fluid (Schmier- und Kühlöl) betrieben werden können, so dass in dem Gehäuse 76 nur ein Ölhaushalt vorhanden ist.

Das Gehäuse 76 weist einen eingangsseitigen Wandabschnitt 78 auf, durch den hindurch die Kupplungsanordnung 16 mit der Eingangswellenanordnung 34 verbunden ist. Ferner weist das Gehäuse 76 einen dem eingangsseitigen Wandabschnitt 78 axial gegenüberliegenden endseitigen Wandabschnitt 80 auf. Ferner beinhaltet das Gehäuse 76 eine in axialer Richtung zwischen den Wandabschnitten 78, 80 angeordnete Lagerebene bzw. Lagerwand 82. Die Lagerwand 82 und die Wandabschnitte 78, 80 dienen zum Lagern von Wellen des Stufengetriebes. Die Lagerwand 82 bildet eine Lagerebene und kann als Lagerplatte ausgebildet sind, oder kann einstückig mit einem Teil des Gehäuses 76 ausgebildet sein.

Die Ausgangswelle 48 ist mittels eines ersten Ausgangwellenlagers 84 und mittels eines zweiten Ausgangswellenlagers 90 drehbar gelagert. Das erste Ausgangswellenlager 84 ist als angestellte Lagerung in X-Anordnung ausgebildet. Das zweite Ausgangswellenlager 90 ist als Nadellager ausgebildet, das sich an der Lagerwand 82 radial abstützt. Die Ausgangswelle 48 erstreckt sich von der Lagerwand 82 aus in Richtung hin zum eingangsseitigen Wandabschnitt 78. Die Ausgangswelle 48 weist an ihrem der Lagerwand 82 abgewandten Ende ein Kegelrad 86 auf, das mit einem Tellerrad 88 in Eingriff steht. Das Kegelrad 86 und das Tellerrad 88 sind Teil der Differentialtriebanordnung 50. Das Tellerrad 88 ist starr mit einem Eingangsglied des Differentials 22 verbunden. Zwischen dem ersten Ausgangswellenlager 84 und dem zweiten Ausgangswellenlager 90 ist das mit der Ausgangswelle 48 verbundene Festrad 47-2 angeordnet.

Die Eingangswellenanordnung 34 ist mittels eines ersten Eingangswellenlagers 92, eines zweiten Eingangswellenlagers 94 und eines dritten Eingangswellenlagers 96 drehbar gelagert. Das erste Eingangswellenlager 92 lagert die Hohlwelle 38 in Bezug auf den eingangsseitigen Wandabschnitt 78. Das zweite Eingangswellenlager 94 lagert die Innenwelle 36 in Bezug auf den endseitigen Wandabschnitt 80. Das dritte Eingangswellenlager 96 lagert die Hohlwelle 38 in Bezug auf die Lagerwand 82.

Das erste und das zweite Eingangswellenlager 92, 94 sind als Kugellager ausgebildet. Das dritte Eingangswellenlager 96 ist, wie auch das zweite Ausgangswellenlager 90, als Rollenlager ausgebildet.

Die Vorgelegewelle 44 ist mittels eines ersten Vorgelegewellenlagers 98, eines zweiten Vorgelegewellenlagers 100 und eines dritten Vorgelegewellenlager 102 drehbar gelagert. Das erste Vorgelegewellenlager 98 lagert die Vorgelegewelle drehbar in Bezug auf den eingangsseitigen Wandabschnitt 78. Das zweite Vorgelegewellenlager 100 lagert die Vorgelegewelle 44 drehbar in Bezug auf den endseitigen Wandabschnitt 80. Das dritte Vorgelegewellenlager 102 lagert die Vorgelegewelle 44 drehbar in Bezug auf die Lagerplatte 82. Das erste Vorgelegewellenlager 98 ist als Kugellager ausgebildet. Das zweite und das dritte Vorgelegewellenlager 100, 102 sind als Rollenlager ausgebildet.

Die Rückwärtsgangwelle 54 ist mittels eines ersten Rückwärtsgangwellenlagers 104 und mittels eines zweiten Rückwärtsgangwellenlagers 106 drehbar gelagert. Das erste Rückwärtsgangwellenlager 104 ist als Nadellager ausgebildet und lagert einen dem eingangsseitigen Wandabschnitt 78 zugeordneten Endabschnitt der Rückwärtsgangwelle 54. Das zweite Rückwärtsgangwellenlager 106 ist als Kugellager ausgebildet und lagert die Rückwärtsgangwelle 54 in Bezug auf die Lagerwand 82.

Das Rückwärtsgang-Festrad 72 ist auf der dem endseitigen Wandabschnitt 80 zugewandten axialen Seite der Lagerwand 82 angeordnet. Die Rückwärtsgangwelle 54 erstreckt sich folglich durch die Lagerwand 82 hindurch. Das Rückwärtsgang-Losrad 68 ist auf der dem eingangsseitigen Wandabschnitt 78 zugewandten axialen Seite der Lagerplatte 82 angeordnet. Die Rückwärtsgangschaltkupplung 70 ist in axialer Richtung zwischen dem Rückwärtsgang-Losrad 68 und dem ersten Rückwärtsgangwellenlager 104 angeordnet.

Der Ausgangs-Radsatz 46 ist axial benachbart zu der Lagerwand 82 angeordnet, und zwar in axialer Richtung gesehen zwischen der Lagerwand 82 und dem Vorwärtsgang-Radsatz für die Gangstufe 2. Die Eingangswellenanordnung 34, die Vorgelegewelle 44, die Ausgangswelle 48 und die Rückwärtsgangwelle 54 sind jeweils drehbar in Bezug auf die Lagerwand 82 gelagert. Die Differentialtriebanordnung 50 ist vorzugsweise ohne Achsversatz ausgebildet, so dass das gleiche Öl verwendbar ist wie für die Radsätze, die Lager, die Kupplung und/oder die Hydraulik.

Das Stufengetriebe 18 kann in unterschiedlichen Varianten hergestellt werden, bei denen die Übersetzungen der Vorwärtsgang-Radsätze und/oder die Übersetzung des Ausgangs-Radsatzes 46 unterschiedlich sein können. Bei allen Varianten ist jedoch die Differentialtriebanordnung 50 mit dem Kegelrad 86 und dem Tellerrad 88 identisch als Gleichteil aufgebaut, so dass die Differentialtriebanordnung mit einer hohen Produktionsqualität hergestellt werden kann.

Durch eine flexible Aufteilung der einzelnen Übersetzungen der Vorwärtsgangstufen und der Übersetzung des Ausgangs-Radsatzes kann die Auslegung auf unterschiedliche Lastkollektive angepasst werden.

Die Abtriebswellen 24L, 24R sind in axialer Richtung gesehen hinter der Kupplungsanordnung 16 angeordnet. In der Darstellung der Fig. 1 sind diese in axialer Richtung zwischen den Radsätzen für die Gangstufen 8 und 6 angeordnet. In alternativen Ausgestaltungen liegt die Achse der Abtriebswellen 24L, 24R jedoch zwischen der Kupplungsanordnung 16 und dem eingangsseitigen Wandabschnitt 78.

Das Stufengetriebe 18 ist in Fig. 1 in einer schematischen Abwicklung gezeigt, um sämtliche Wellen gleichzeitig darstellen zu können.

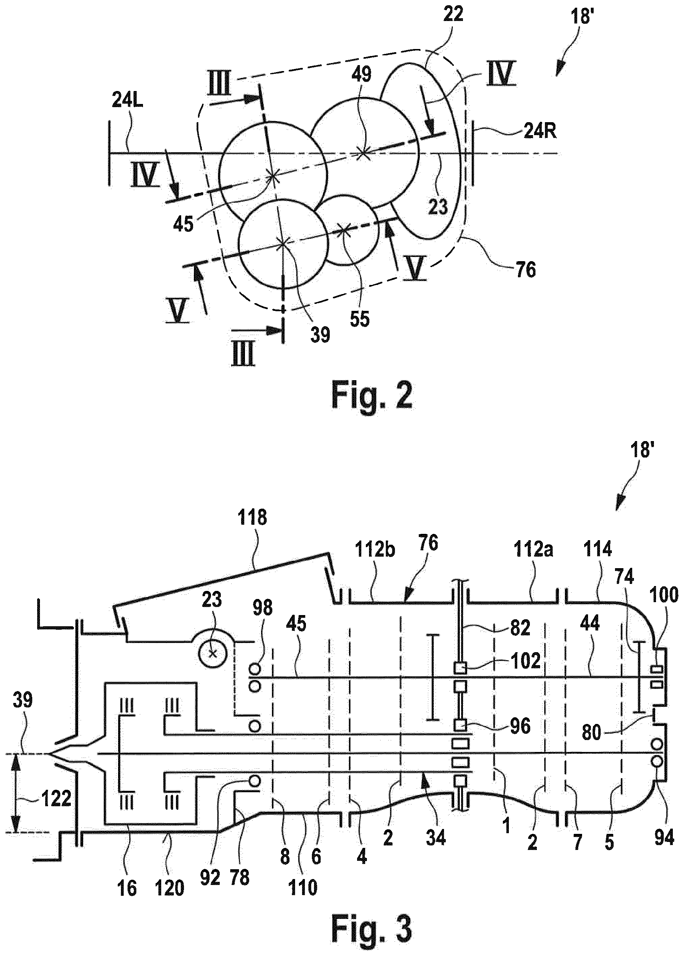

In den Fig. 2 bis 5 ist eine weitere Ausführungsform eines Stufengetriebes 18' gezeigt, das hinsichtlich Aufbau und Funktionsweise generell dem Stufengetriebe 18 der Fig. 1 entspricht. Gleiche Elemente sind daher durch gleiche Bezugszeichen gekennzeichnet. Im Folgenden werden im Wesentlichen die Unterschiede bzw. eine bevorzugte Anordnung der einzelnen Wellen in einer betrieblichen Normallage erläutert.

Fig. 2 zeigt eine schematische axiale Draufsicht auf das Getriebe 18' in einer sogenannten betrieblichen Normallage, also in einer Lage, in der das Stufengetriebe 18' in einem Kraftfahrzeug eingebaut ist, das sich auf einer ebenen Fläche befindet, also horizontal ausgerichtet ist.

In Fig. 2 ist ferner schematisch das Gehäuse 76 angedeutet.

Man erkennt aus der Darstellung der Fig. 2, dass die Eingangsachse 39 der Eingangswellenanordnung 34 die tiefstliegende Achse des Stufengetriebes 18' ist. Die Rückwärtsgangachse 55 liegt etwas höher, jedoch tiefer als die Vorgelegeachse 45. Die Ausgangsachse 49 liegt von den vier genannten Achsen am höchsten. Die Ausgangsachse 49 liegt jedoch auf der gleichen axialen Höhe wie die Differentialachse 23, so dass die Differentialtriebanordnung 50 ohne Achsversatz realisiert werden kann.

Fig. 3 zeigt in schematischer Form eine Schnittansicht entlang der Linie III-III der Fig. 2, wobei die Schnittansicht durch die Achsen 39, 45 verläuft.

Man erkennt zunächst, dass das Gehäuse 76 vorzugsweise ein Hauptgehäuse 110 aufweist, das sich in axialer Richtung zumindest von dem eingangsseitigen Wandabschnitt 78 bis hin zu der Lagerplatte 82 erstreckt. Ferner beinhaltet das Gehäuse 76 ein Zwischengehäuse 112, das sich von der Lagerplatte 82 in Richtung hin zum endseitigen Wandabschnitt 80 erstreckt. Das Gehäuse 76 weist ferner einen Gehäusedeckel bzw. ein Endgehäuse 114 auf, das den endseitigen Wandabschnitt 80 bildet und sich bis hin zu dem Zwischengehäuse 112 erstreckt.

Die Radsätze der Gangstufen 8, 6 sind innerhalb des Hauptgehäuses 110 aufgenommen. Die Radsätze der Vorwärtsgangstufen 1, 2 sind innerhalb des Zwischengehäuses 112 aufgenommen. Die Radsätze der Gangstufen 7, 5 sind innerhalb des Endgehäuses 114 aufgenommen.

An dem Hauptgehäuse 110 kann auf der Oberseite eine Ausnehmung vorgesehen sein, die von einem Montagedeckel 118 verschlossen ist. Über die mittels des Montagedeckels 118 verschlossene Montageöffnung kann beispielsweise ein Hydraulikmodul montiert werden. Wie es in Fig. 3 dargestellt ist, kann die Kupplungsanordnung 16 ebenfalls innerhalb des Hauptgehäuses 110 aufgenommen sein.

In Fig. 3 ist ferner eine Unterseite 120 des Gehäuses 76 dargestellt. Die Unterseite 120 ist vorzugsweise der tiefste Punkt des Gehäuses 76 (von einem etwaigen Flansch oder dergleichen abgesehen).

Die Eingangswellenanordnung 34 ist innerhalb des Gehäuses 76 so aufgenommen, dass ein Abstand 122 zwischen der Eingangsachse 39 und der Unterseite 120 des Gehäuses 76 kleiner ist als 130 mm. Hierdurch kann ein sehr tiefer Schwerpunkt realisiert werden, wie er beispielsweise bei Anwendungen in Sportfahrzeugen bevorzugt ist.

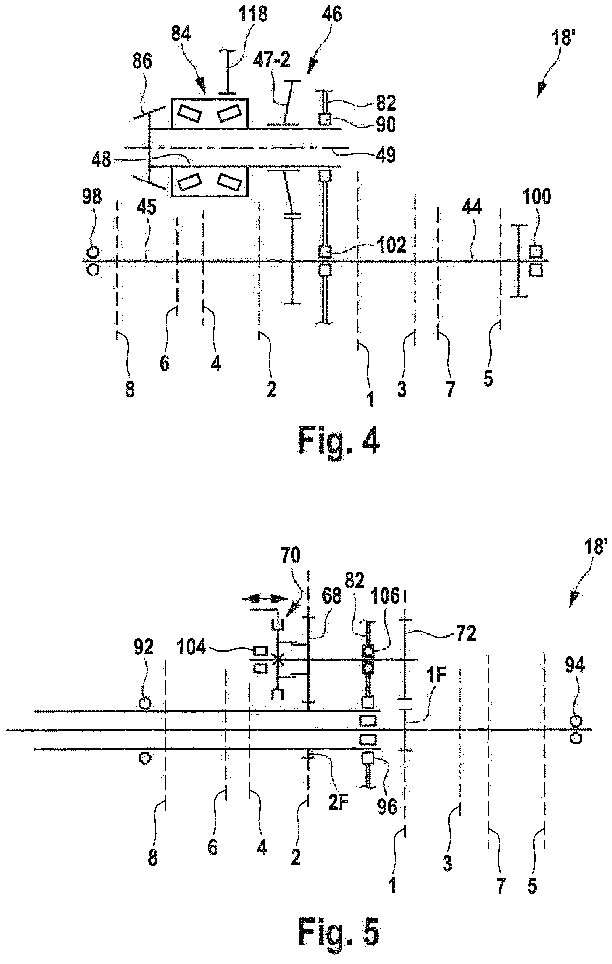

Fig. 4 zeigt eine Schnittansicht entlang der Linie IV-IV der Fig. 2 , wobei die Schnittansicht durch die Vorgelegeachse und durch die Ausgangsachse 49 hindurch verläuft.

Man erkennt, dass die Ausgangswelle 48 als Hohlwelle ausgebildet sein kann. Ferner ist zu erkennen, dass das erste Ausgangswellenlager 84 drehbar in Bezug auf das Hauptgehäuse 110 gelagert sein kann.

Ferner ist zu erkennen, dass das mit der Ausgangswelle 48 verbundene Festrad 47-2 in axialer Richtung gegen einen Anschlag auf die Ausgangswelle 48 axial aufgeschoben sein kann.

Das Ausgangswellenlager 84 erstreckt sich vorzugsweise über eine solche axiale Länge, so dass es sich in axialer Richtung mit dem Radsatz für die Vorwärtsgangstufe 6 und mit dem Radsatz für die Vorwärtsgangstufe 4 axial überschneidet.

Fig. 5 zeigt eine schematische Schnittansicht entlang der Linie V-V der Fig. 2, wobei die Schnittansicht durch die Eingangsachse 39 und durch die Rückwärtsgangachse 55 hindurch verläuft.

Es ist zu erkennen, dass das Rückwärtsgang-Festrad 72 nicht mit dem Festrad 1 F des Radsatzes für die Vorwärtsgangstufe 1 in Eingriff steht, sondern mit dem Losrad 1 L verbunden sein muss.

Ferner ist zu erkennen, dass das erste Rückwärtsgangwellenlager 104 an einem Gehäuseabschnitt abgestützt ist, an dem auch eine Aktuatorik zum Betätigen der Schaltkupplung 70 für die Rückwärtsgangstufe festgelegt ist.

Zum Einlegen der Rückwärtsgangstufe sind nicht nur die Schaltkupplung 70 für die Rückwärtsgangstufe sondern auch ein der Vorwärtsgangstufe 1 zugeordnete Schaltkupplung der Schaltkupplungsanordnung 60 zu schließen.

In den Fig. 3, 4 und 5 ist die Lagerwand 82 jeweils als separate Lagerplatte ausgebildet, die, wie es schematisch in Fig. 3 angedeutet ist, zwischen zwei Zwischengehäusen 112a, 112b angeordnet ist. Die Zwischengehäuse 112a, 112b sind jedoch vorzugsweise als ein einstückiges Zwischengehäuse 112 ausgebildet, wobei die Lagerwand 82 vorzugsweise einstückig mit diesem Zwischengehäuse 112 ausgebildet ist. Die Radsätze der Vorwärtsgangstufen 4, 2 können ebenfalls in dem Zwischengehäuse 112 aufgenommen sein.

## Patentansprüche

1. Stufengetriebe (18) für Kraftfahrzeuge (10), insbesondere in Form eines Doppelkupplungsgetriebes (20), mit
- einer Eingangswellenanordnung (34), die entlang einer Eingangsachse (39) ausgerichtet ist;
- einer Vorgelegewelle (44), die entlang einer Vorgelegeachse (45) ausgerichtet ist;
- einer Mehrzahl von wenigstens sechs Vorwärtsgangstufen (1-8), die durch jeweilige gangstufenspezifische Vorwärtsgang-Radsätze (58) einrichtbar sind, die jeweils ein Vorwärtsgang-Losrad und ein Vorwärtsgang-Festrad aufweisen, und die mittels einer jeweiligen Vorwärtsgang-Schaltkupplung einlegbar bzw. auslegbar sind;
- einem Ausgangs-Radsatz (46), der ein an der Vorgelegewelle (44) gelagertes erstes Ausgangsrad (47-1) und ein zweites Ausgangsrad (47-2) aufweist, das an einer Ausgangswelle (48) gelagert ist, die entlang einer Ausgangsachse (49) ausgerichtet ist,
**dadurch gekennzeichnet, dass** das Stufengetriebe (18) ein Gehäuse (76) aufweist, das eine betriebliche Normallage aufweist, wenn das Fahrzeug auf einer Ebene horizontal steht, wobei die Eingangswellenanordnung (34) in der betrieblichen Normallage tiefer angeordnet ist als die Vorgelegewelle (44) und tiefer als die Ausgangswelle (48), dieunterhalb oder auf der gleichen Höhe wie eine Differentialachse (23) eines Differentials (22) zum Verteilen von Antriebsleistung auf angetriebene Räder (26L, 26R) angeordnet ist.

2. Stufengetriebe nach Anspruch 1, **dadurch gekennzeichnet, dass** die Eingangswellenanordnung (34) an einem Eingang (78) des Gehäuses (76) mit einer Kupplungsanordnung (16) verbunden ist, wobei die Ausgangswelle (48) mit einem Differential (22) zum Verteilen von Antriebsleistung auf angetriebene Räder (26L, 26R) gekoppelt ist, wobei eine Differentialachse (23) des Differentials (22) oberhalb der Kupplungsanordnung (16) und/oder in axialer Richtung hinter der Kupplungsanordnung (16) angeordnet ist.

3. Stufengetriebe nach einem der Ansprüche 1 oder 2, **dadurch gekennzeichnet, dass** die Ausgangswelle (48) mit einer Differentialtriebanordnung (50) verbunden ist, die als Kegeltriebanordnung (50) ausgebildet ist, wobei ein mit der Ausgangswelle (48) verbundenes Kegelrad (86) ohne Achsversatz mit einem Tellerrad (88) in Eingriff steht, das ein Antriebsglied eines Differentials (22) antreibt.

4. Stufengetriebe nach einem der Ansprüche 1 bis 3 **dadurch gekennzeichnet, dass** die Vorgelegewelle (44) in einem axial zwischen zwei Vorwärtsgang-Radsätzen liegenden Bereich mittels einer Lagerwand (82) gelagert ist.

5. Stufengetriebe nach einem der Ansprüche 1 bis 4 , **dadurch gekennzeichnet, dass** der Ausgangs-Radsatz (46) axial benachbart zu der Lagerwand (82) angeordnet ist.

6. Stufengetriebe nach einem der Ansprüche 1 bis 5, **dadurch gekennzeichnet, dass** die Ausgangswelle (48) und/oder eine Rückwärtsgangwelle (54) an der Lagerwand (82) drehbar gelagert ist.

7. Stufengetriebe nach einem der Ansprüche 1 bis 6, **dadurch gekennzeichnet, dass** sich die Ausgangswelle (48) und/oder eine Rückwärtsgangwelle (54) von der Lagerwand (82) aus in axialer Richtung hin zu einem Eingang (78) des Stufengetriebes (18) erstrecken, über den die Eingangswellenanordnung (34) mit einer Kupplungsanordnung (16) verbindbar ist.

8. Stufengetriebe nach einem der Ansprüche 1 -7, **dadurch gekennzeichnet, dass** das zweite Ausgangsrad (47-2), in axialer Richtung gesehen, zwischen der Lagerwand (82) und einer Differentialtriebanordnung (50) angeordnet ist, mittels der ein Differential (22) zum Verteilen von Antriebsleistung auf angetriebene Räder (26L, 26R) antreibbar ist.

9. Stufengetriebe nach einem der Ansprüche 1 - 8, **dadurch gekennzeichnet, dass** ein Vorwärtsgang-Radsatz für die Vorwärtsgangstufe 1 und ein Vorwärtsgang-Radsatz für die Vorwärtsgangstufe 2 auf gegenüberliegenden Seiten der Lagerwand (82) angeordnet sind und von allen Vorwärtsgang-Radsätzen (58) der Lagerwand (82) am nächsten sind.

10. Stufengetriebe nach einem der Ansprüche 1 - 9, **dadurch gekennzeichnet, dass** eine Rückwärtsgangstufe (R) über eine Rückwärtsgangwelle (54) einrichtbar ist, die entlang einer Rückwärtsgangachse (55) ausgerichtet ist, an der ein mittels einer zugeordneten Rückwärtsgangstufen-Schaltkupplung (70) schaltbares Rückwärtsgang-Losrad (68) gelagert ist, das mit einem der Vorwärtsgang-Radsätze (58) in Eingriff steht, und an der ein Rückwärtsgang-Festrad (72) festgelegt ist, das mit einem anderen der Vorwärtsgang-Radsätze (58) in Eingriff steht.

## Claims

1. Multi-stage gear (18) for motor vehicles (10), in particular in the form of a double clutch transmission (20), having
- an input shaft arrangement (34) which is oriented along an input axis (39);
- a countershaft (44) which is oriented along a countershaft axis (45);
- a plurality of at least six forward-gear stages (1-8) which can be established by respective gear-stage-specific forward-gear gear sets (58) which each have a forward-gear idler gear and a forward-gear fixed gear, and which can be engaged or disengaged by means of a respective forward-gear shift clutch;
- an output gear set (46) which has a first output gear (47-1) mounted on the countershaft (44) and a second output gear (47-2) which is mounted on an output shaft (48) which is oriented along an output axis (49),
**characterized in that** the multi-stage gear (18) has a housing (76) which has an operational normal position if the vehicle is situated horizontally on a plane, wherein the input shaft arrangement (34) is arranged lower in the operational normal position than the countershaft (44) and lower than the output shaft (48) which is arranged below or at the same level as a differential axis (23) of a differential (22) for distributing drive power to driven wheels (26L, 26R).

2. Multi-stage gear according to Claim 1, **characterized in that** the input shaft arrangement (34) is connected at an input (78) of the housing (76) to a clutch arrangement (16), wherein the output shaft (48) is coupled to a differential (22) for distributing drive power to driven wheels (26L, 26R), wherein a differential axis (23) of the differential (22) is arranged above the clutch arrangement (16) and/or in the axial direction behind the clutch arrangement (16).

3. Multi-stage gear according to either of Claims 1 and 2, **characterized in that** the output shaft (48) is connected to a differential drive arrangement (50) which is designed as a bevel-gear drive arrangement (50), wherein a bevel gear (86) connected to the output shaft (48) is in engagement, without axial offset, with a ring gear (88) which drives a drive member of a differential (22).

4. Multi-stage gear according to one of Claims 1 to 3, **characterized in that** the countershaft (44) is mounted by means of a bearing wall (82) in a region situated axially between two forward-gear gear sets.

5. Multi-stage gear according to one of Claims 1 to 4, **characterized in that** the output gear set (46) is arranged axially adjacent to the bearing wall (82).

6. Multi-stage gear according to one of Claims 1 to 5, **characterized in that** the output shaft (48) and/or a reverse-gear shaft (54) are/is mounted rotatably on the bearing wall (82).

7. Multi-stage gear according to one of Claims 1 to 6, **characterized in that** the output shaft (48) and/or a reverse-gear shaft (54) extend/extends from the bearing wall (82) in the axial direction towards an input (78) of the multi-stage gear (18) via which the input shaft arrangement (34) can be connected to a clutch arrangement (16).

8. Multi-stage gear according to one of Claims 1-7, **characterized in that** the second output gear (47-2), as viewed in the axial direction, is arranged between the bearing wall (82) and a differential drive arrangement (50) by means of which a differential (22) for distributing drive power to driven wheels (26L, 26R) can be driven.

9. Multi-stage gear according to one of Claims 1-8, **characterized in that** a forward-gear gear set for the forward-gear stage 1 and a forward-gear gear set for the forward-gear stage 2 are arranged on opposite sides of the bearing wall (82) and, of all the forward-gear gear sets (58), are closest to the bearing wall (82).

10. Multi-stage gear according to one of Claims 1-9, **characterized in that** a reverse-gear stage (R) can be established via a reverse-gear shaft (54) which is oriented along a reverse-gear axis (55) on which there is mounted a reverse-gear idler gear (68) which can be switched by means of an assigned reverse-gear stage shift clutch (70) and which is in engagement with one of the forward-gear gear sets (58), and on which there is fastened a reverse-gear fixed gear (72) which is in engagement with another of the forward-gear gear sets (58).

## Revendications

1. Boîte de vitesses étagée (18) pour véhicules automobiles (10), en particulier sous la forme d'une boîte de vitesses à double embrayage (20), avec
- un système d'arbre d'entrée (34), qui est orienté suivant un axe d'entrée (39);
- un arbre intermédiaire (44), qui est orienté suivant un axe intermédiaire (45);
- une multiplicité d'au moins six rapports de marche avant (1-8), qui peuvent être réalisés au moyen d'engrenages de marche avant spécifiques des rapports respectifs (58), qui présentent chacun une roue libre de marche avant et une roue fixe de marche avant, et qui peuvent être engagés ou libérés au moyen d'un embrayage de marche avant respectif;
- un engrenage de sortie (46), qui présente une première roue de sortie (47-1) montée sur l'arbre intermédiaire (44) et une deuxième roue de sortie (47-2), qui est montée sur un arbre de sortie (48) qui est orienté suivant un axe de sortie (49),
**caractérisée en ce que** la boîte de vitesses étagée (18) présente un carter (76), qui présente une position de fonctionnement normale, lorsque le véhicule se trouve horizontalement sur un plan, dans laquelle le système d'arbre d'entrée (34) dans la position de fonctionnement normale est disposé plus bas que l'arbre intermédiaire (44) et plus bas que l'arbre de sortie (48), qui est disposé en dessous ou à la même hauteur qu'un axe de différentiel (23) d'un différentiel (22) destiné à répartir la puissance motrice sur des roues motrices (26L, 26R).

2. Boîte de vitesses étagée selon la revendication 1, **caractérisée en ce que** le système d'arbre d'entrée (34) est relié à une entrée (78) du carter (76) à un système d'embrayage (16), dans laquelle l'arbre de sortie (48) est couplé à un différentiel (22) destiné à répartir la puissance motrice sur des roues motrices (26L, 26R), dans laquelle un axe de différentiel (23) du différentiel (22) est disposé au-dessus du système d'embrayage (16) et/ou dans la direction axiale derrière le système d'embrayage (16).

3. Boîte de vitesses étagée selon une des revendications 1 ou 2, **caractérisée en ce que** l'arbre de sortie (48) est relié à un système d'entraînement différentiel (50), qui est formé par un système de pignons coniques (50), dans laquelle un pignon conique (86) assemblé à l'arbre de sortie (48) engrène sans décalage d'axe avec une couronne dentée (88), qui entraîne un organe d'entraînement d'un différentiel (22).

4. Boîte de vitesses étagée selon l'une quelconque des revendications 1 à 3, **caractérisée en ce que** l'arbre intermédiaire (44) est monté dans une région située axialement entre deux engrenages de marche avant au moyen d'une paroi d'appui (82).

5. Boîte de vitesses étagée selon l'une quelconque des revendications 1 à 4, **caractérisée en ce que** l'engrenage de sortie (46) est disposé axialement à proximité de la paroi d'appui (82).

6. Boîte de vitesses étagée selon l'une quelconque des revendications 1 à 5, **caractérisée en ce que** l'arbre de sortie (48) et/ou un arbre de marche arrière (54) est/sont monté(s) de façon rotative sur la paroi d'appui (82).

7. Boîte de vitesses étagée selon l'une quelconque des revendications 1 à 6, **caractérisée en ce que** l'arbre de sortie (48) et/ou un arbre de marche arrière (54) s'étend(ent) à partir de la paroi d'appui (82) en direction axiale jusqu'à une entrée (78) de la boîte de vitesses étagée (18), par laquelle le système d'arbre d'entrée (34) peut être relié à un système d'embrayage (16).

8. Boîte de vitesses étagée selon l'une quelconque des revendications 1 à 7, **caractérisée en ce que** la deuxième roue de sortie (47-2), vue en direction axiale, est disposée entre la paroi d'appui (82) et un système d'entraînement différentiel (50), au moyen duquel un différentiel (22) destiné à répartir la puissance motrice sur des roues motrices (26L, 26R) peut être entraîné.

9. Boîte de vitesses étagée selon l'une quelconque des revendications 1 à 8, **caractérisée en ce qu'**un engrenage de marche avant pour le premier rapport de marche avant et un engrenage de marche avant pour le deuxième rapport de marche avant sont disposés sur des côtés opposés de la paroi d'appui (82) et sont les plus proches de tous les engrenages de marche avant (58) de la paroi d'appui (82).

10. Boîte de vitesses étagée selon l'une quelconque des revendications 1 à 9, **caractérisée en ce qu'**un rapport de marche arrière (R) peut être réalisé au moyen d'un arbre de marche arrière (54), qui est orienté suivant un axe de marche arrière (55), sur lequel est montée une roue libre de marche arrière (68) commutable au moyen d'un embrayage de marche arrière associé (70), laquelle engrène avec un des engrenages de marche avant (58), et auquel est fixée une roue fixe de marche arrière (72), qui engrène avec un autre des engrenages de marche avant (58).
